# EUROPÄISCHE PATENTSCHRIFT

(11) **EP 4 063 051 B1**
(45) Veröffentlichungstag und Bekanntmachung des Hinweises auf die Patenterteilung: **08.07.2026**
(21) Anmeldenummer: 21164540.3
(22) Anmeldetag: 24.03.2021
(51) Int. Cl.: B23B 47/26, B28D 7/00

(54) **VORSCHUB-VORRICHTUNG FÜR EIN KERNBOHRGERÄT, SOWIE SYSTEM UMFASSEND EINE VORSCHUB-VORRICHTUNG UND EIN KERNBOHRGERÄT**
FEED DEVICE FOR A CORE DRILLING MACHINE, AND SYSTEM COMPRISING A FEED DEVICE AND A CORE DRILLING MACHINE
DISPOSITIF D'AVANCE POUR UN APPAREIL DE CAROTTAGE, AINSI QUE SYSTÈME COMPRENANT UN DISPOSITIF D'AVANCE ET UN APPAREIL DE CAROTTAGE

(43) Veröffentlichungstag der Anmeldung: 28.09.2022
(73) Patentinhaber: Hilti Aktiengesellschaft, 9494 Schaan (LI)
(72) Erfinder: Zogg, Urs, 9472 Grabs (CH); Metzler, Christian, 6822 Satteins (AT)
(74) Vertreter: Hilti Aktiengesellschaft Corporate Intellectual Property

(56) Entgegenhaltungen:
- EP-A1- 3 292 969
- WO-A1-2020/260156
- US-B2- 8 888 417

## Beschreibung

Die vorliegende Erfindung betrifft eine Vorschub-Vorrichtung für ein Kernbohrgerät, wobei die Vorschub-Vorrichtung einen Motor und eine Motorsteuerung aufweist. Die Vorschub-Vorrichtung ist dadurch gekennzeichnet, dass die Vorschub-Vorrichtung zur Energieversorgung mindestens eine Batterie und/oder mindestens einen Akkumulator umfasst. In einem weiteren Aspekt betrifft die Erfindung ein System, das eine vorgeschlagene Vorschub-Vorrichtungen, sowie ein Kernbohrgerät umfasst.

### Hintergrund der Erfindung:

In Stand der Technik sind Kernbohrgeräte bekannt, deren Bohr-Vorschub mit Hilfe einer Vorschub-Vorrichtung bewirkt wird. Diese automatischen Vorschub-Vorrichtungen ersetzen in speziellen Anwendungsbereichen die früher üblichen Handräder, die dazu verwendet wurden, um das Kernbohrgerät bzw. seine Bohrkrone in den zu bearbeitenden Untergrund hineinzutreiben. Die bekannten Vorschub-Vorrichtungen werden beispielsweise als Autofeed-Vorrichtung bezeichnet.

Die im Stand der Technik bekannten Systeme aus Kernbohrgerät und Vorschub-Vorrichtung werden üblicherweise mit elektrischer Energie betrieben, die üblicherweise aus einem zumeist öffentlichen Strom- oder Energieversorgungsnetz bezogen wird. In manchen Fällen können auch eigene Baustellen-Netzte für die Energieversorgung des Systems aus Kernbohrgerät und Vorschub-Vorrichtung verwendet werden. Nachteilig an den bekannten Systemen ist jedoch, dass üblicherweise beide Geräte - Kernbohrgerät, sowie Vorschub-Vorrichtung - Energie aus einer Leitung beziehen, sei es, weil die Vorschub-Vorrichtung ihre Energie direkt von dem Kernbohrgerät bezieht oder sei es, weil beide Geräte dieselbe Leitung zum Energieversorgungsnetz für ihre Energieversorgung verwenden.

In beiden Fällen ist es so, dass die Leistung, die zum Betrieb der Vorschub-Vorrichtung benötigt wird, die für das Kernbohrgerät zur Verfügung stehende Leistung reduziert. Das ist nicht erwünscht, weil der Motor des Kernbohrgeräts, welcher die Bohrkrone des Kernbohrgeräts antreibt, einen hohen Energie- und Leistungsbedarf aufweist. Darüber hinaus ist bei der Verwendung von Energie aus einem öffentlichen oder Baustellen-Netz die Verwendung eines Transformators erforderlich, um die elektrische Energie für das Gerät nutzbar zu machen.

Beispielsweise offenbart die US 8 888 417 B2 eine Bohrvorrichtung mit einem Steuergerät für eine Vorschubvorrichtung. Dieses Dokument offenbart eine Vorschub-Vorrichtung gemäß dem Oberbegriff des Patentanspruchs 1.

In der EP 3 292 969 A1 wird eine Vorschubvorrichtung für eine Kernbohrmaschine beschrieben. Die WO 2020 260 156 A1 offenbart ein System und ein Verfahren zur Steuerung eines Kernbohrgeräts und einer Vorschubvorrichtung mit einem Human Machine Interface (HMI), das an dem Kernbohrgerät angeordnet ist.

Die Aufgabe, die der vorliegenden Erfindung zugrunde liegt, besteht somit darin, die vorstehend beschriebenen Nachteile des Standes der Technik zu überwinden und eine Vorschub-Vorrichtung für ein Kernbohrgerät bereitzustellen, das den Energie- und Leistungsbedarf des Kernbohrgeräts nicht reduziert. Die Fachwelt würde es begrüßen, wenn eine Vorschub-Vorrichtung bereitgestellt werden könnte, bei der die gesamte Leistung des Energieversorgungsnetzes für das Kernbohrgerät zur Verfügung steht. Wünschenswert wäre es darüber hinaus, wenn der Verkabelungsaufwand zwischen den Geräten reduziert werden könnte und wenn ferner eine besonders kompakte und handliche Vorschub-Vorrichtung bereitgestellt werden könnte.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Vorschub-Vorrichtung für ein Kernbohrgerät vorgesehen. Diese Vorschub-Vorrichtung weist einen Motor und eine Motorsteuerung auf und ist dadurch gekennzeichnet, dass die sie zur Energieversorgung mindestens eine Batterie und/oder mindestens einen Akkumulator umfasst, wobei die Vorschub-Vorrichtung einen Eingang und einen Ausgang zum Durchfluss einer Kühlflüssigkeit aufweist. Die Vorsehung von mindestens einer Batterie und/oder von mindestens einem Akkumulator zur bevorzugt autonomen Energieversorgung der Vorschub-Vorrichtung ermöglicht es vorteilhafterweise, dass die gesamte Energie und Leistung, die von dem Energieversorgungsnetz bereitgestellt werden kann, für das Kernbohrgerät zur Verfügung steht und von diesem genutzt werden kann. Darüber hinaus kann ein Verkabelungsaufwand zwischen dem Kernbohrgerät und der Vorschub-Vorrichtung erheblich reduziert werden. Es hat sich ferner gezeigt, dass durch die Energieversorgung der Vorschub-Vorrichtung mit Hilfe einer Batterie oder eines Akkumulators ("Akku") eine besonders kompakte Vorschub-Vorrichtung bereitgestellt werden kann.

Manche Systeme aus Kernbohrgerät und Vorschub-Vorrichtung werden in Zusammenhang mit einer Kühlflüssigkeit betrieben, wobei die Kühlflüssigkeit insbesondere dazu verwendet wird, die Bohrkrone zu kühlen. Als Kühlflüssigkeit wird üblicherweise Wasser verwendet, da es häufig gut verfügbar ist. In solchen Systemen, bei denen die Bohrkrone mit einer Kühlflüssigkeit gekühlt wird, ist allerdings die Vorsehung eines Fehlerstromschutzschalters innerhalb der Vorschub-Vorrichtung verpflichtend. Vorteilhafterweise kann bei einer erfindungsgemäßen Vorschub-Vorrichtungen auf die Vorsehung eines solchen Fehlerstromschutzschalters verzichtet werden, wodurch weiter Bauraum eingespart werden kann, so dass noch kompaktere Geräte bereitgestellt werden können. Das Weglassen des Fehlerstromschutzschalters kann insbesondere dadurch erreicht werden, dass durch die mindestens eine Batterie bzw. den mindestens einen Akku eine bevorzugt autonome Energieversorgung der Vorschub-Vorrichtung ermöglicht wird. Bekannte Fehlerschutzschalter sind beispielsweise Portable Residual Current Devices (PRCD).

Vorteilhafterweise kann durch die Erfindung die Vorschub-Vorrichtung ohne einen solchen Fehlerstromschutzschalter verwendet werden. Mit dem Einsatz der Batterie wird die Vorschub-Vorrichtung vorzugsweise in einem Niederspannungsbereich betrieben, was den Einsatz des Fehlerstromschutzschalters überflüssig macht. Insbesondere ist auch kein Transformator für den Betrieb der Vorschub-Vorrichtung erforderlich, um die elektrische Energie nutzbar zu machen. Dadurch kann die Vorschub-Vorrichtung erheblich leichter und kompakter gestaltet werden. Außerdem entfällt die galvanische Trennung, die üblicherweise bei der Verwendung von Transformatoren erforderlich ist.

Tests haben gezeigt, dass die bevorzugt autonome Energieversorgung der vorgeschlagenen Vorschub-Vorrichtung vorteilhafterweise dazu in der Lage ist, bei einem Zusammenbruch des Energie- oder Baustellennetzes oder bei einem sonstigen Stromausfall so schnell zu reagieren, dass es das Kernbohrgerät bzw. dessen Bohrkrone aus Blockade- oder Verklemm-Situationen befreien kann.

Ein weiterer Vorteil der Erfindung besteht darin, dass unerwünschte Luft- und Kriechstrecken innerhalb der vorgeschlagenen Vorschub-Vorrichtung erheblich reduziert werden können. Dies ist insbesondere auf die Abwesenheit der Netzspannung des Energienetzes zurückzuführen, die durch die bevorzugt autonome Energieversorgung der Vorschub-Vorrichtung durch die mindestens eine Batterie bzw. den mindestens einen Akku ermöglicht wird. Die Erfinder haben erkannt, dass ein möglicher Stromüberschlag von der Spannung abhängt, so dass durch die Verwendung eine elektrische Gefährdung des Nutzers besonders wirksam vermieden wird.

Es ist im Sinne der Erfindung bevorzugt, dass die mindestens eine Batterie und/oder der mindestens eine Akkumulator eine Ausgangsspannung in einem Bereich von 15 bis 30 V, bevorzugt in einem Bereich von 18 bis 27 V, besonders bevorzugt in einem Bereich von 20 bis 24 V und am meisten bevorzugt von 22 V aufweist. Diese Spannungswerte haben sich als besonders geeignet erwiesen, um die bevorzugt autonome Energieversorgung der Vorschub-Vorrichtung zu ermöglichen.

Es ist im Sinne der Erfindung bevorzugt, dass die Vorschub-Vorrichtung über Mittel verfügt, per Bluetooth mit dem Kernbohrgerät zu kommunizieren. Vorzugsweise ist es die Motorsteuerung, welche über die Kommunikationsmittel verfügt. Die dadurch begründete Kommunikationsverbindung ist insbesondere drahtlos ausgebildet, so dass der Verkabelungsaufwand innerhalb des vorgeschlagenen Systems vorteilhafterweise weiter reduziert werden kann.

Es ist im Sinne der Erfindung bevorzugt, dass die Vorschub-Vorrichtung ein Getriebe aufweist.

Es ist erfindungsgemäß vorgesehen, dass die Vorschub-Vorrichtung einen Eingang und einen Ausgang für eine Kühlflüssigkeit aufweist. Darüber hinaus kann eine Durchflussmenge der Kühlflüssigkeit mit einem Ventil innerhalb der Vorschub-Vorrichtung eingestellt werden. Es stellt einen wesentlichen Vorteil der Erfindung dar, dass bei solchen wasserführenden Systemen auf die Vorsehung eines PRCD innerhalb der Vorschub-Vorrichtung verzichtet werden kann. Mithin hat sich die Energieversorgung einer Vorschub-Vorrichtung unter Verwendung von Batterien und/oder Akkumulatoren als besonders wirkungsvoll erwiesen, wobei vorteilhafterweise auch die Handhabung des Systems für den Nutzer erheblich vereinfacht werden kann, insbesondere dann, wenn es sich um ein wasserführendes System handelt.

Es ist im Sinne der Erfindung bevorzugt, dass die Vorschub-Vorrichtung eine Leistung in einem Bereich von 100 bis 200 W aufweist. Leistungswerte in dem genannten Bereich haben sich als besonders geeignet erwiesen, um die bevorzugt autonome Energieversorgung der Vorschub-Vorrichtung zu ermöglichen.

In einem zweiten Aspekt betrifft die Erfindung ein System, das eine vorgeschlagene Vorschub-Vorrichtung, sowie ein Kernbohrgerät umfasst. Die für die Vorschub-Vorrichtung eingeführten Begriffe, Definitionen und technischen Vorteile gelten vorzugsweise für das vorgeschlagene System analog.

Es ist im Sinne der Erfindung bevorzugt, dass die Vorschub-Vorrichtung mit Hilfe eines Schlittens an einem Bohrständer bewegt werden kann, wobei die Vorschub-Vorrichtung vorteilhafterweise in diesen Schlitten integrierbar ist. Die Batterie und/oder der Akkumulator können vorzugsweise in oder an der Vorschub-Vorrichtung angeordnet vorliegen. Die Integrationsfähigkeit der vorgeschlagenen Vorschub-Vorrichtung wird vorteilhafterweise dadurch erreicht, dass der Verkabelungsaufwand durch das Weglassen von Fehlerschutzschalter verringert und das Gerät dadurch sehr kompakt gehalten werden kann. Tests haben darüber hinaus gezeigt, dass durch die Erfindung eine Wärmeentwicklung in der vorgeschlagenen Vorschub-Vorrichtung erheblich reduziert werden kann. Durch diese erfindungsgemäßen Vorteile kann die vorgeschlagene Vorschub-Vorrichtung so kompakt gebaut werden, dass eine im Wesentlichen vollständige Integration der Vorrichtung in einen Schlitten möglich ist.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

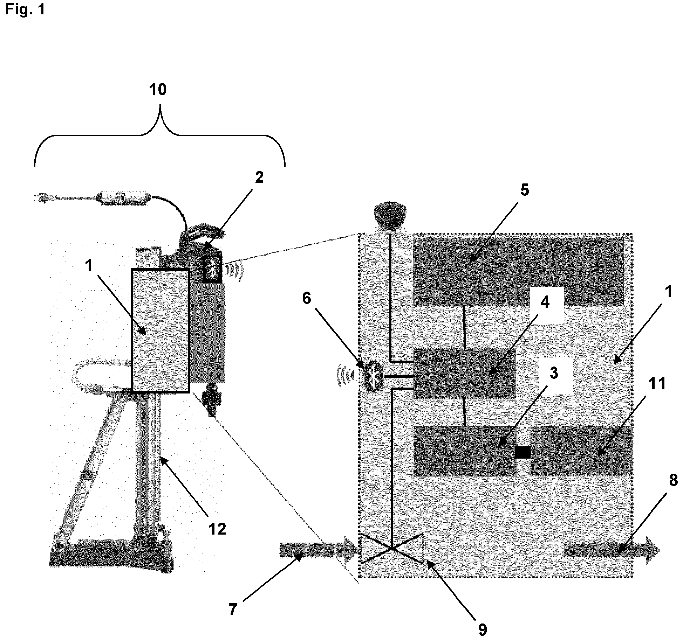

- Fig. 1: Ansicht einer bevorzugten Ausgestaltung der Erfindung

### Ausführungsbeispiele und Figurenbeschreibung:

Figur 1 zeigt eine bevorzugte Ausgestaltung einer vorgeschlagenen Vorschub-Vorrichtung 1. Die Vorschub-Vorrichtung 1 bildet mit dem Kernbohrgerät 2 ein Bohr-System 10 und ist vorzugsweise dazu eingerichtet, das Kernbohrgerät 2 in den zu bearbeitenden Untergrund hineinzutreiben. Das Kernbohrgerät 2 kann als Werkzeug mit einer Bohrkrone ausgestattet sein, wobei es mit der Bohrkrone möglich ist, zylinderförmige Bohrkerne aus dem Untergrund herauszuschneiden. Das System 10 aus Kernbohrgerät 2 und Vorschub-Vorrichtung 1 kann vorzugsweise an einem Bohrständer 12 angeordnet sein. Alternativ kann das Kernbohrgerät 2 handgeführt betrieben werden.

Auf der rechten Seite der Fig. 1 ist eine vergrößerte schematische Ansicht der Vorschub-Vorrichtung 1 abgebildet. Dargestellt ist der Motor 3 der Vorschub-Vorrichtung 1, sowie die Motorsteuerung 4. Der Motor 3 kann mit einem Getriebe 11 verbunden sein. Mit dem Getriebe 11 kann die Leistung des Motors 3 der Vorschub-Vorrichtung 1 optimal an unterschiedliche Applikationen und Einsatzbereiche angepasst werden. Die Motorsteuerung 4 liegt vorzugsweise mit dem Motor 3 elektrisch verbunden vor. Darüber hinaus kann zwischen der Vorschub-Vorrichtung 1 und dem Kernbohrgerät 2 eine Kommunikationsverbindung bestehen, die vorzugsweise drahtlos ausgebildet ist. Diese Kommunikationsverbindung kann insbesondere mit Hilfe von Kommunikationsmitteln 6 gebildet werden, die insbesondere dazu eingerichtet sind, eine bluetoothbasierte Kommunikationsverbindung zwischen der Motorsteuerung 4 der Vorschub-Vorrichtung 1 und dem Kernbohrgerät 2 herzustellen.

Die Vorschub-Vorrichtung 1 weist für ihre Energieversorgung mindestens eine Batterie 5 und/oder mindestens einen Akkumulator 5 auf. Vorzugsweise haben die Batterie 5 und/oder der Akkumulator 5 eine Ausgangs-Nenn-Spannung von 22 V. Es können allerdings auch andere Spannungswerte bevorzugt sein. Mit Hilfe der Batterie 5 und/oder des Akkumulators 5 kann eine vorzugsweise autonome Energieversorgung der Vorschub-Vorrichtung 1 gewährleistet werden. Der Begriff «autonom» bedeutet im Sinne der Erfindung bevorzugt, dass die Energieversorgung der Vorschub-Vorrichtung 1 unabhängig von einem beispielsweise öffentlichen Energieversorgungsnetz oder einem Baustellen-Energieversorgungsnetz erfolgt. Insbesondere ist die Vorschub-Vorrichtung 1 zum Zwecke der Energieversorgung nicht mit dem Kernbohrgerät 2 verbunden, sondern die gesamte Energie und/oder Leistung des bereitstehenden Energieversorgungsnetzes kann von dem Kernbohrgerät 2 als Antriebsenergie oder -leistung genutzt werden. Dies stellt einen wesentlichen Vorteil der Erfindung dar.

Wenn das Bohrsystem 10 in Zusammenhang mit einer Flüssigkeit zum Kühlen der Bohrkrone verwendet wird, ist bei konventionellen Vorschub-Vorrichtungen, wie sie aus dem Stand der Technik bekannt sind, ein Fehlerschutzschalter vorgesehen. Auf diesen Fehlerschutzschalter kann vorteilhafterweise verzichtet werden, wenn die Vorschub-Vorrichtung 1 über eine autonome Energieversorgung verfügt. Dadurch kann die vorgeschlagene Vorschub-Vorrichtung 1 besonders kompakt und raumsparend ausgebildet sein. Darüber hinaus kann die Handhabung des Bohr-Systems wesentlich erleichtert werden, weil der Fehlerschutzschalter der Vorschub-Vorrichtung 1 nicht mehr betätigt werden muss.

Die Vorschub-Vorrichtung 1 weist einen Eingang 7 und einen Ausgang 8 für eine Kühlflüssigkeit auf. Es kann darüber hinaus ein Ventil 9 vorgesehen sein, mit dem eine Durchflussmenge an Kühlflüssigkeit reguliert bzw. eingestellt werden kann. Dieses Ventil 9 kann beispielsweise elektrisch leitend mit der Motorsteuerung 4 der Vorschub-Vorrichtung 1 verbunden vorliegen oder von der Motorsteuerung 4 gesteuert werden. Das Ventil 9 kann beispielsweise so ausgebildet sein, dass es ein Ein- und Ausschalten eines Flusses von Kühlflüssigkeit ermöglicht. Es kann aber auch dazu eingerichtet sein, eine Durchflussmenge an Kühlflüssigkeit stufenlos oder in Stufen einzustellen.

### Bezugszeichenliste

- 1: Vorschub-Vorrichtung
- 2: Kernbohrgerät
- 3: Motor der Vorschub-Vorrichtung
- 4: Motorsteuerung der Vorschub-Vorrichtung
- 5: Batterie und/oder Akkumulator
- 6: Kommunikationsmittel
- 7: Eingang für Kühlflüssigkeit
- 8: Ausgang für Kühlflüssigkeit
- 9: Ventil zur Regulierung der Durchflussmenge der Kühlflüssigkeit
- 10: System
- 11: Getriebe der Vorschub-Vorrichtung
- 12: Bohrständer

## Patentansprüche

1. Vorschub-Vorrichtung (1) für ein Kernbohrgerät (2), wobei die Vorschub-Vorrichtung (1) einen Motor (3) und eine Motorsteuerung (4) aufweist,
**dadurch gekennzeichnet, dass**
die Vorschub-Vorrichtung (1) zur Energieversorgung mindestens eine Batterie (5) und/oder mindestens einen Akkumulator (5) umfasst, wobei die Vorschub-Vorrichtung (1) einen Eingang (7) und einen Ausgang (8) zum Durchfluss einer Kühlflüssigkeit aufweist.

2. Vorschub-Vorrichtung (1) nach Anspruch 1
**dadurch gekennzeichnet, dass**
die mindestens eine Batterie (5) und/oder der mindestens eine Akkumulator (5) eine Ausgangsspannung in einem Bereich von 15 bis 30 V, bevorzugt in einem Bereich von 18 bis 27 V, besonders bevorzugt in einem Bereich von 20 bis 24 V und am meisten bevorzugt von 22 V aufweist.

3. Vorschub-Vorrichtung (1) nach Anspruch 1
**dadurch gekennzeichnet, dass**
eine Durchflussmenge der Kühlflüssigkeit mit einem Ventil (9) innerhalb der Vorschub-Vorrichtung (1) eingestellt werden kann.

4. Vorschub-Vorrichtung (1) nach einem der vorhergehenden Ansprüche
**dadurch gekennzeichnet, dass**
die Vorschub-Vorrichtung (1) eine Leistung in einem Bereich von 100 bis 200 W, bevorzugt in einem Bereich von 120 bis 180 W, besonders bevorzugt in einem Bereich von 140 bis 160 W und am meisten bevorzugt von 150 W aufweist.

5. Vorschub-Vorrichtung (1) nach einem der vorhergehenden Ansprüche
**dadurch gekennzeichnet, dass**
die Vorschub-Vorrichtung (1) ein Getriebe (11) aufweist.

6. System (10) umfassend eine Vorschub-Vorrichtung (1) nach einem der vorhergehenden Ansprüche, sowie ein Kernbohrgerät (2).

7. System (10) nach Anspruch 6
**dadurch gekennzeichnet, dass**
die Vorschub-Vorrichtung (1) mit Hilfe eines Schlittens an einem Bohrständer (12) bewegt werden kann, wobei die Vorschub-Vorrichtung (1) in diesen Schlitten integrierbar ist.

8. System (10) nach Anspruch 6 oder 7
**dadurch gekennzeichnet, dass**
zwischen der Vorschub-Vorrichtung (1) und dem Kernbohrgerät (2) eine Kommunikationsverbindung besteht.

9. System (10) nach einem der Ansprüche 6 bis 8
**dadurch gekennzeichnet, dass**
die Kommunikationsverbindung zwischen der Vorschub-Vorrichtung (1) und dem Kernbohrgerät (2) von Kommunikationsmitteln (6) bewirkt wird.

## Claims

1. Feed device (1) for a core drilling machine (2), wherein the feed device (1) has a motor (3) and a motor controller (4),
**characterized in that**
the feed device (1) comprises, for power supply, at least one battery (5) and/or at least one rechargeable battery (5), wherein the feed device (1) has an inlet (7) and an outlet (8) for the throughflow of a cooling liquid.

2. Feed device (1) according to Claim 1,
**characterized in that**
the at least one battery (5) and/or the at least one rechargeable battery (5) has an output voltage in a range of from 15 to 30 V, preferably in a range of from 18 to 27 V, particularly preferably in a range of from 20 to 24 V and most preferably of 22 V.

3. Feed device (1) according to Claim 1,
**characterized in that**
a throughflow rate of the cooling liquid can be adjusted by way of a valve (9) within the feed device (1).

4. Feed device (1) according to any of the preceding claims,
**characterized in that**
the feed device (1) has a power in a range of from 100 to 200 W, preferably in a range of from 120 to 180 W, particularly preferably in a range of from 140 to 160 W and most preferably of 150 W.

5. Feed device (1) according to any of the preceding claims,
**characterized in that**
the feed device (1) has a gearbox (11).

6. System (10) comprising a feed device (1) according to any of the preceding claims and a core drilling machine (2).

7. System (10) according to Claim 6,
**characterized in that**
the feed device (1) can be moved by means of a carriage on a drill stand (12), wherein the feed device (1) can be integrated into this carriage.

8. System (10) according to Claim 6 or 7,
**characterized in that**
there is a communication connection between the feed device (1) and the core drilling machine (2).

9. System (10) according to any of Claims 6 to 8,
**characterized in that**
the communication connection between the feed device (1) and the core drilling machine (2) is established by communication means (6).

## Revendications

1. Dispositif d'avance (1) pour un appareil de carottage (2), le dispositif d'avance (1) comprenant un moteur (3) et une commande de moteur (4),
**caractérisé en ce que**
le dispositif d'avance (1) comprenant, pour l'alimentation en énergie, au moins une batterie (5) et/ou au moins un accumulateur (5), le dispositif d'avance (1) présentant une entrée (7) et une sortie (8) pour l'écoulement d'un fluide de refroidissement.

2. Dispositif d'avance (1) selon la revendication 1,
**caractérisé en ce que**
l'au moins une batterie (5) et/ou l'au moins un accumulateur (5) présentent une tension de sortie dans une plage de 15 à 30 V, de préférence dans une plage de 18 à 27 V, de manière particulièrement préférée dans une plage de 20 à 24 V et de manière tout particulièrement préférée de 22 V.

3. Dispositif d'avance (1) selon la revendication 1,
**caractérisé en ce que**
un débit du fluide de refroidissement pouvant être réglé au moyen d'une vanne (9) à l'intérieur du dispositif d'avance (1).

4. Dispositif d'avance (1) selon l'une des revendications précédentes,
**caractérisé en ce que**
le dispositif d'avance (1) présente une puissance dans une plage de 100 à 200 W, de préférence dans une plage de 120 à 180 W, de manière particulièrement préférée dans une plage de 140 à 160 W et de manière tout particulièrement préférée de 150 W.

5. Dispositif d'avance (1) selon l'une des revendications précédentes,
**caractérisé en ce que**
le dispositif d'avance (1) comprend un engrenage (11).

6. Système (10) comprenant un dispositif d'avance (1) selon l'une des revendications précédentes, ainsi qu'un appareil de carottage (2).

7. Système (10) selon la revendication 6,
**caractérisé en ce que**
le dispositif d'avance (1) peut être déplacé à l'aide d'un chariot sur un bâti de perçage (12), le dispositif d'avance (1) étant intégrable dans ce chariot.

8. Système (10) selon la revendication 6 ou 7,
**caractérisé en ce que**
une liaison de communication est établie entre le dispositif d'avance (1) et l'appareil de carottage (2).

9. Système (10) selon l'une des revendications 6 à 8
**caractérisé en ce que**
la liaison de communication entre le dispositif d'avance (1) et l'appareil de carottage (2) est assurée par des moyens de communication (6).
